# EUROPEAN PATENT SPECIFICATION

(11) **EP 3 341 189 B1**
(45) Date of publication and mention of the grant of the patent: **30.10.2019**
(21) Application number: 16766029.9
(22) Date of filing: 09.08.2016
(51) Int. Cl.: B29D 22/02, B66F 3/35, E04F 21/00

(54) **INFLATABLE SUPPORT**
AUFBLASBARER TRÄGER
SUPPORT GONFLABLE

(30) Priority: 26.08.2015 GB 201515151
(43) Date of publication of application: 04.07.2018
(73) Proprietor: Easy Innovations Limited, Canterbury, Kent CT3 4JZ (GB)
(72) Inventor: MARTINO, Leo, Canterbury Kent CT3 4JZ (GB)
(74) Representative: Bridle, Andrew Barry
(86) International application number: PCT/GB2016/052469
(87) International publication number: WO 2017/032973

(56) References cited:
- EP-A1- 0 983 415
- WO-A1-95/13448
- DE-U1- 29 519 715
- DE-U1- 29 717 506

## Description

The present invention relates to an inflatable support and in particular to an inflatable support capable of supporting a weight of up to about 120kg for use in the installation of windows and/or doors or for levelling products that have adjustable feet.

When installing windows or doors, it is necessary to locate the window or door in the correct position prior to securing it in place. Typically, this involves spacing the bottom and sides of the door/window from the substrate that defines the architectural opening in which the window/door is being located. The installer either carries multiple shims in order to obtain the correct spacing around the window/door or carries angled wedges which have to be carefully inserted to obtain the correct spacing. With both of these methods, fine adjustment of the spacing is a time consuming exercise.

Similarly, when trying to level appliances, such as domestic appliances having adjustable feet, it is often a matter of trial and error. The installer raises the appliance at one corner and adjusts the relevant foot. The appliance is then lowered until the foot engages the ground and the level of the appliance is then checked. This process must be repeated several times for each foot until the correct level for the appliance as a whole is achieved.

Inflatable products are known, see for example EP 0 983 415, but it is often difficult to insert these into relatively tight spaces, as the flexible sides lack significant rigidity and the body has a tendency to ruck up or flex.

Inflatable supports according to the preamble of claim 1 are known from DE 297 17 506 U1 and DE 295 19 715 U1.

According to a first aspect of the present invention, there is provided an inflatable support comprising a body formed from a flexible, non-distensible, gas impermeable polymeric material, wherein the body defines therein a cavity; a cavity valve which defines a gas inlet into the cavity and a gas outlet from the cavity; and a pump coupled to the cavity valve via a conduit, wherein the inflatable support further includes a reinforcing element located within the cavity.

In the context of the present invention, flexible means that the polymeric material may be deflected out of a substantially planar configuration and returned to a substantially planar configuration without plastic deformation or damage to the polymeric material. Thus, air may be pumped into the cavity which causes the portions of the body which define the cavity to deflect outwards and air may be released from the cavity which causes the portions of the body which define the cavity to return to their rest configuration.

Non-distensible means that the surface area of the body does not significantly increase as air is pumped into the cavity to inflate the support. For example, the surface area of the body increases by an amount which is less than 5%, suitably less than 1%, optionally less than 0.5% of the surface area when air within the cavity is at atmospheric pressure. Thus, the polymeric material is a relatively inelastic material.

The inflatable support of the present invention may be located beneath an article to be supported, or between one side of the article and an adjacent substrate, and the support may be inflated via the pump which pumps air into the cavity. As the cavity is inflated, the non-distensible nature of the polymeric material causes a thickness dimension of the support to increase, which in turn urges the article away from the adjacent substrate. When the gap between the article and the respective substrate has the desired size, the user stops the pump and the gas impermeable nature of the body maintains the air pressure within the cavity which maintains the spacing (i.e. size of the gap) at the desired value while the article is supported and/or fixed in the desired location relative to the or each substrate.

The valve suitably has an open configuration, in which air may flow into or out from the cavity, and a closed configuration in which air may be prevented from flowing out from the cavity.

The inflatable support suitably defines a single cavity.

The reinforcing element located within the cavity provides a degree of rigidity to the support in its deflated or non-inflated configuration and allows it to be urged into a relatively tight gap without the body folding or rucking.

The reinforcing element is in the form of a continuous or non-continuous sheet of reinforcing material. A continuous sheet allows the desired amount of rigidity, while maintaining a desired minimum thickness for the support when in a non-inflated configuration. However, a non-continuous sheet (i.e. a sheet including one or more voids) may be used.

In an embodiment of the invention as defined herein, the reinforcing element is formed from a polymeric material or from a metal. The polymer may be a relatively rigid thermoplastic polymer, for example, nylon, polypropylene, polyacrylate, ABS (acrylonitrile benzene styrene copolymer), polycarbonate, polyethylene, polystyrene, PVC (polyvinyl chloride), etc. Alternatively, it may be formed from a metal, such as aluminium or steel.

The reinforcing material is suitably in the form of a sheet having a thickness of 0.1 to 5mm. Suitably, the thickness of the sheet is 0.5 to 2mm. Sheets having this thickness are sufficiently thick that they provide a desired level of rigidity to the support, but do not significantly increase the thickness of the support in its non-inflated configuration.

The shape of the reinforcing element suitably corresponds to the cross-sectional shape of the cavity. For example, where the cross-sectional shape of the cavity is substantially rectangular, the shape of the reinforcing element is suitably also rectangular. However, the reinforcing element suitably has dimensions which are less than the corresponding dimensions of the cavity to allow for a reduction in the length and width dimensions of the cavity as it is inflated. The skilled person will appreciate that for a non-distensible material, as the value of the dimension Z (thickness) increases, the values of the X and Y dimensions (length and width of the cavity) must decrease.

The reinforcing element is arranged such that it is free to move within the cavity. In other words, the reinforcing element is separate from the body and not secured to it.

The body of the support may define a pair of opposed wall portions which may be overlaid such that they are adjacent to each other and the respective edge portion(s) are aligned. The aligned edge portion(s) may then be sealed together to form a closed cavity. Thus, the cavity may be defined by a pair of opposed walls which are sealed together.

The body may comprise two separate wall portions which are sealed together along the or each edge portion. Alternatively, it may comprise a single sheet element which is folded about a mid point to define the opposed wall portions. In such an embodiment, the cavity comprises a common side portion (about which the body is folded) and one or more aligned edge portions. For example, the cavity may be substantially rectangular and be defined by a common side portion and three aligned side edge portions which are sealed together to form a gas-tight seal.

In embodiments in which the cavity is substantially rectangular, the support may be wedge shaped, wherein the opposed side walls are spaced from each other at one end (for example the end defined by the fold or return in the polymeric material) and are in contact with each other at the opposite end (for example, a sealed edge portion).

The seals between adjacent edge portions may be obtained via an adhesive layer and/or they may be welded seams between the adjacent edge portions of the polymeric material. Thus, the polymeric material may be a material that is capable of being welded.

The cavity valve may form part of the body (i.e. the cavity valve and the body are a one-piece component) or the cavity valve may be a separate component which is coupled to the body in such a way that a gas-tight seal is formed between the cavity valve and the body. In an embodiment of the invention, the cavity valve is welded to the body and the weld is gas-tight. Thus, both the cavity valve and the polymeric material may be capable of being welded, for example, they may both be formed from or comprise a weldable polymeric material.

The pump is suitably a manually operated flexible bulb pump. In such an embodiment, the pump may include an air inlet having a one-way inlet valve. It may further include an air outlet suitably also including a one-way outlet valve. When the flexible bulb is squeezed by a user, the air inside the bulb may be forced out of the air outlet via the one-way outlet valve and into the conduit, and when it is released, air may be drawn into the bulb via the one-way inlet valve. Repeated squeezing and releasing of the bulb would therefore cause air to be pumped into the cavity via the one-way outlet valve and the conduit.

In order to deflate the cavity and return it to its non-inflated configuration, the pump may also include a pressure release valve having an open configuration in which pressurised air within the cavity is released and a closed configuration which prevents the release of air within the cavity. The pressure release valve may be movable between the open and closed configurations by a user. In other words, the pressure release valve may be manually operable. Suitably, the pressure release valve is biased to its closed configuration.

The conduit which fluidly couples the pump to the cavity valve is suitably formed from a non-distensible material and may be flexible. Accordingly, air pressure is not lost through expansion or distension of the conduit, but the conduit allows movement of the pump relative to the body. The conduit may be releasably coupled to the cavity valve and may be releasably coupled to the pump. In this way, the support body may be replaced in the event that the material becomes worn or torn and is no longer gas impermeable without the need also to replace the pump and conduit; the pump may be replaced without the need also to replace the support body or the conduit; or the conduit may be replaced without the need also to replace the support body and pump.

According to a second aspect of the invention, there is provided a method of producing an inflatable support as defined anywhere herein, the method including providing a flexible, non-distensible, gas impermeable polymeric material; forming the material into a body which defines a cavity, wherein the cavity includes an open portion; locating the reinforcing element within the cavity via the open portion and closing the open portion with a gas impermeable seal. The reinforcing element may be as defined anywhere herein.

The method may further include the steps of providing a cavity valve through the body to provide gas access to the cavity.

In an embodiment of the invention according to the second aspect, the method includes the step of coupling a conduit to a cavity valve. The method may further include the step of coupling a pump to the opposite end of the conduit. The cavity valve, conduit and pump may be as defined anywhere herein.

The skilled person will appreciate that the features described and defined in connection with the aspect of the invention and the embodiments thereof may be combined in any combination, regardless of whether the specific combination is expressly mentioned herein. Thus, all such combinations are considered to be made available to the skilled person.

An embodiment of the invention will now be described, by way of example only, with reference to the accompanying drawings in which:
Figure 1 is a schematic view of an inflatable support according to the first aspect of the invention;
Figure 2 is a cross section through the axis A-A of the body of the inflatable support in a non-inflated configuration;
Figure 3a is a plan view of the body material prior to assembling the support;
Figure 3b shows a partially assembled body portion of the inflatable support; and
Figure 4 shows a cross-section through the axis A-A of the body of the inflatable support in an inflated configuration.

For the avoidance of doubt, the skilled person will appreciate that in this specification, the terms "up", "down", "front", "rear", "upper", "lower", "width", etc. refer to the orientation of the components as found in the example when installed for normal use as shown in the Figures.

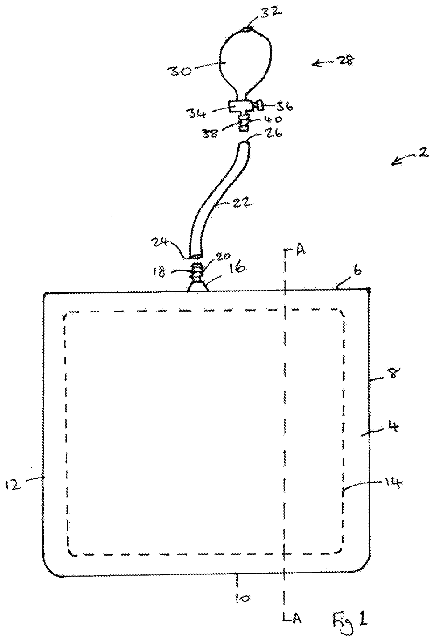

An inflatable support 2 is shown generally in Figure 1. The support includes a body 4 formed from a flexible, non-distensible, gas permeable polymeric material, such as TPU (thermoplastic urethane). The body is formed from a single sheet of material which is folded about a fold line 6 and sealed along side edge portions 8, 10, 12 by welding together aligned edge portions of the material using heat and pressure to form welded seams along the edges 8, 10, 12 of the body.

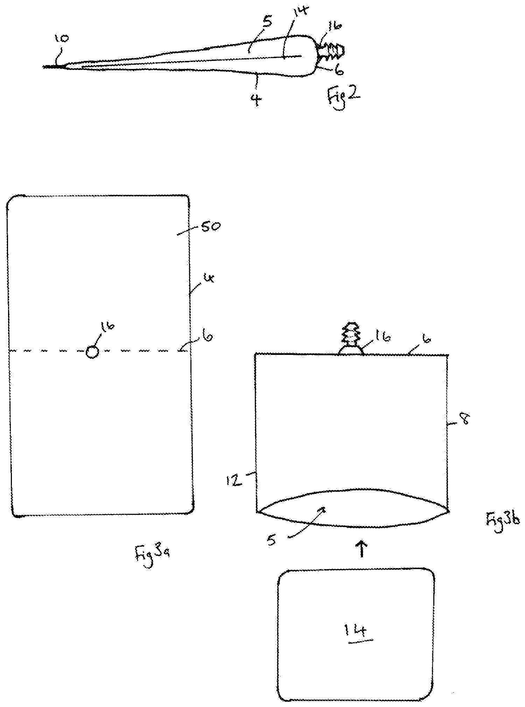

The body 4 defines a substantially rectangular cavity 5 (shown in Figure 2) between opposed wall portions of the sheet material, wherein the cavity is bordered by the welded seams 8, 10, 12 and the common fold line 6.

A reinforcing element 14 (shown by the dashed lines in Figure 1) in the form of a PVC (polyvinyl chloride) sheet is located within the cavity 5 defined by the body 4. The sheet has a thickness of 1mm and a shape which corresponds to the shape of the cavity, but with smaller length and width dimensions. The reinforcing element 14 is separate from the body 4 and not connected or coupled to it. Thus, the reinforcing element 14 is free to move within the confines of the cavity 5.

A cavity valve 16 extends through the sheet material of the body 4 at the fold line 6 and is in fluid communication with the interior of the cavity 5. The cavity valve 16 is also formed from TPU and includes a projecting portion 18 which defines thereon a plurality of annular "sawtooth" ribs 20. The cavity valve 16 is welded to the body 4 to provide a gas-tight seal between the valve 16 and the body 4.

The inflatable support 2 further includes a flexible, non-distensible conduit 22 formed from a non-distensible latex material which is open at both ends 24, 26.

A bulb pump 28 forms a final part of the support 2. The bulb pump 28 includes a resiliently deformable bulb-shaped body 30 formed from a silicone polymer. The bulb-shaped body 30 has at its top end a one-way inlet valve 32 and at the opposite end a one-way outlet valve (not shown). The bulb pump 28 further includes a pressure release valve 34 having a manually depressable button 36 which opens the valve. The valve 34 is biased to a closed configuration and will only allow gas to pass through the release valve 34 when the button 36 is depressed. A conduit engaging projection 38 is defined at the bottom of the bulb pump 28, which is similar to the projecting portion 18 in that it includes annular sawtooth ribs 40.

To assemble the inflatable support, the projecting portion 18 of the cavity valve 16 is urged into the end 24 of the conduit 22. The annular sawtooth ribs 20 engage the interior side wall of the conduit 22 and prevent the undesired removal of the conduit 22 from the valve 16.

A similar step is undertaken with respect to the conduit engaging portion 38 of the bulb pump 28 and the opposite end 26 of the conduit 22.

Once coupled, a user manually squeezes the bulb-shaped body 30 of the bulb pump 28 which forces air from the bulb-shaped body 30 into the cavity 5 defined by the body 4 via the one-way outlet valve, the conduit 22 and the cavity valve 16. When the bulb-shaped body 30 is released, air is drawn into the body 30 via the one-way inlet valve 32. The user continues to squeeze and release the bulb pump 28 until a desired amount of air has been forced into the cavity 5 defined by the body 4. If it is desired to release some of the air from the cavity 5 (and thereby to reduce the pressure inside the cavity), the user may depress the button 36, which allows air from within the cavity 5 to escape via the pressure release valve 34.

As air is forced into the cavity 5, the opposing walls of the body 4 become spaced apart and the air pressure within the cavity 5 will determine the spacing between the opposed walls, up to a maximum spacing limit beyond which spacing cannot increase. The limit is defined by the shape and dimensions of the body 4 and the maximum pressure that the pump is able to achieve within the cavity.

Figure 2 shows a cross-sectional view of the body 4 through the axis A-A which shows the wedge shaped profile of the body 4, the cavity 5 and the reinforcing element 14 located within the cavity 5.

Figures 3a and 3b show how the body 4 is formed. A sheet 50 of the TPU material used to make the body 4 is provided and the cavity valve 16 is inserted through the sheet 50 and welded thereto in a gas-tight manner. The cavity valve 16 is located on the fold line 6.

The sheet 50 is then folded in half such that the two opposing walls are defined with the respective side edge portions aligned. Two of the side edge portions are welded together to form the opposing side seams 8, 12 and an opening opposite to the fold line 6.

As shown in Figure 3b, the reinforcing element 14 is located within the cavity 5 defined between the opposing walls of the sheet 50 and the opening is closed by welding together the edge portions which defined the opening to create the seam 10. The cavity 5 becomes gas-tight when seam 10 is created, with the reinforcing element 14 located within the cavity 5.

It will be appreciated that there are alternative methods that a skilled person could utilise to arrive at the embodiment described herein. For example, rather than forming two opposed seams 8, 12 and an opening, the sheet material may be folded about the fold line 6 and the reinforcing element 14 may be placed between the opposed wall portions. All three seams 8, 10, 12 may then be formed simultaneously or sequentially via a conventional polymeric welding process.

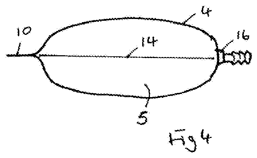

Figure 4 shows the body 4 in an inflated configuration in which the cavity 5 contains pressurised air. It will be appreciated that although the opposed walls of the cavity have been forced apart by the pressurised air in the cavity 5, their surface area has not changed significantly. In this inflated configuration, the body 4 of the support 2 is able to support a mass in excess of 120kg.

## Claims

1. An inflatable support (2) comprising a body (4) formed from a flexible, non-distensible, gas impermeable polymeric material, wherein the body defines therein a cavity (5); a cavity valve (16) which defines a gas inlet into the cavity and a gas outlet from the cavity; and a pump (28) coupled to the cavity valve (16) via a conduit (22), wherein the inflatable support (2) further includes a reinforcing element (14) located within the cavity (5), **characterised in that** the reinforcing element (14) is in the form of a continuous or non-continuous sheet of reinforcing material; and wherein the reinforcing element is free from the body (4) and is capable of movement relative to the body (4) within the cavity (5).

2. An inflatable support according to Claim 1, wherein the body (4) defines a single cavity (5).

3. An inflatable support according to Claim 1 or Claim 2, wherein the reinforcing element (14) is formed from a polymeric material or from a metal.

4. An inflatable support according to any of Claims 1 to 3, wherein the reinforcing element (14) has a thickness of 0.1 to 5mm.

5. An inflatable support according to Claim 4, wherein the reinforcing element (14) has a thickness of 0.5 to 2mm.

6. An inflatable support according to any of Claims 1 to 5, wherein the cavity (5) has a substantially rectangular cross-sectional shape and the reinforcing element (14) has a corresponding shape.

7. An inflatable support according to any of Claims 1 to 6, wherein the body (4) comprises a pair of opposed adjacent wall portions having aligned side edge portions (6, 8, 10, 12) and the aligned side edge portions are sealed together to define the cavity (5).

8. An inflatable support according to any of Claims 1 to 7, wherein the pump (28) is a manually operated flexible bulb pump.

9. An inflatable support according to any of Claims 1 to 8, wherein the pump (28) includes a one-way inlet valve (32).

10. An inflatable support according to any of Claims 1 to 9, wherein the pump (28) includes a pressure release valve (34) having an open configuration in which pressurised air within the cavity (5) is released and a closed configuration which prevents the release of air within the cavity (5), and the pressure release valve is biased to its closed configuration.

11. An inflatable support according to any of Claims 1 to 10, wherein the conduit (22) is formed from a non-distensible material.

12. An inflatable support according to any of Claims 1 to 11, wherein the conduit (22) is releasably coupled to the cavity valve (16).

13. A method of producing an inflatable support (2) as defined in any of Claims 1 to 12, the method including providing a flexible, non-distensible, gas impermeable polymeric material; forming the material into a body (4) which defines a cavity (5), wherein the cavity (5) includes an open portion; locating the reinforcing element (14) within the cavity (5) via the open portion and closing the open portion with a gas impermeable seal.

## Patentansprüche

1. Aufblasbarer Träger (2), umfassend einen Körper (4), der aus einem flexiblen, nicht dehnbaren, gasundurchlässigen polymeren Material gebildet ist, wobei der Körper darin einen Hohlraum (5) definiert; ein Hohlraumventil (16), das einen Gaseinlass in den Hohlraum und einen Gasauslass aus dem Hohlraum definiert; und eine Pumpe (28), die mit dem Hohlraumventil (16) über eine Leitung (22) verbunden ist, wobei der aufblasbare Träger (2) ferner ein Verstärkungselement (14) beinhaltet, das sich innerhalb des Hohlraums (5) befindet, **dadurch gekennzeichnet, dass** das Verstärkungselement (14) in Form einer kontinuierlichen oder nicht kontinuierlichen Platte aus Verstärkungsmaterial vorliegt; und wobei das Verstärkungselement frei vom Körper (4) ist und zur Bewegung relativ zum Körper (4) innerhalb des Hohlraums (5) fähig ist.

2. Aufblasbarer Träger nach Anspruch 1, wobei der Körper (4) einen einzigen Hohlraum (5) definiert.

3. Aufblasbarer Träger nach Anspruch 1 oder Anspruch 2, wobei das Verstärkungselement (14) aus einem polymeren Material oder aus einem Metall gebildet ist.

4. Aufblasbarer Träger nach einem der Ansprüche 1 bis 3, wobei das Verstärkungselement (14) eine Dicke von 0,1 bis 5 mm aufweist.

5. Aufblasbarer Träger nach Anspruch 4, wobei das Verstärkungselement (14) eine Dicke von 0,5 bis 2 mm aufweist.

6. Aufblasbarer Träger nach einem der Ansprüche 1 bis 5, wobei der Hohlraum (5) eine im Wesentlichen rechteckige Querschnittsform aufweist und das Verstärkungselement (14) eine entsprechende Form aufweist.

7. Aufblasbarer Träger nach einem der Ansprüche 1 bis 6, wobei der Körper (4) ein Paar gegenüberliegende benachbarte Wandabschnitte mit ausgerichteten Seitenkantenabschnitten (6, 8, 10, 12) umfasst und die ausgerichteten Seitenkantenabschnitte miteinander versiegelt sind, um den Hohlraum (5) zu definieren.

8. Aufblasbarer Träger nach einem der Ansprüche 1 bis 7, wobei die Pumpe (28) eine manuell betätigte flexible Ballonpumpe ist.

9. Aufblasbarer Träger nach einem der Ansprüche 1 bis 8, wobei die Pumpe (28) ein Einweg-Einlassventil (32) beinhaltet.

10. Aufblasbarer Träger nach einem der Ansprüche 1 bis 9, wobei die Pumpe (28) ein Druckablassventil (34) mit einer offenen Konfiguration, in der druckbeaufschlagte Luft innerhalb des Hohlraums (5) freigesetzt wird, und einer geschlossenen Konfiguration, die die Freisetzung von Luft innerhalb des Hohlraums (5) verhindert, beinhaltet und das Druckablassventil in seine geschlossene Konfiguration vorgespannt ist.

11. Aufblasbarer Träger nach einem der Ansprüche 1 bis 10, wobei die Leitung (22) aus einem nicht dehnbaren Material gebildet ist.

12. Aufblasbarer Träger nach einem der Ansprüche 1 bis 11, wobei die Leitung (22) lösbar mit dem Hohlraumventil (16) verbunden ist.

13. Verfahren zur Herstellung eines aufblasbaren Trägers (2) nach einem der Ansprüche 1 bis 12, wobei das Verfahren Folgendes beinhaltet: Bereitstellen eines flexiblen, nicht dehnbaren, gasundurchlässigen polymeren Materials; Ausbilden des Materials zu einem Körper (4), der einen Hohlraum (5) definiert, wobei der Hohlraum (5) einen offenen Abschnitt beinhaltet; Platzieren des Verstärkungselements (14) innerhalb des Hohlraums (5) über den offenen Abschnitt und Schließen des offenen Abschnitts mit einer gasundurchlässigen Dichtung.

## Revendications

1. Support gonflable (2), comprenant un corps (4) formé d'un matériau polymère flexible, non déformable et imperméable aux gaz, le corps y définissant une cavité (5) ; une soupape de cavité (16), qui définit une entrée de gaz dans la cavité et une sortie de gaz de la cavité ; et une pompe (28) accouplée à la soupape de cavité (16) par l'intermédiaire d'un conduit (22), le support gonflable (2) comprenant en outre un élément de renfort (14) situé dans la cavité (5), le support gonflable étant **caractérisé en ce que** l'élément de renfort (14) se présente sous la forme d'une feuille continue ou non continue d'un matériau de renfort ; et l'élément de renfort étant libre du corps (4) et étant capable de se déplacer par rapport au corps (4) dans la cavité (5).

2. Support gonflable selon la revendication 1, dans lequel le corps (4) définit une unique cavité (5).

3. Support gonflable selon la revendication 1 ou 2, dans lequel l'élément de renfort (14) est constitué d'un matériau polymère ou d'un métal.

4. Support gonflable selon l'une quelconque des revendications 1 à 3, dans lequel l'élément de renfort (14) a une épaisseur de 0,1 à 5 mm.

5. Support gonflable selon la revendication 4, dans lequel l'élément de renfort (14) a une épaisseur de 0,5 à 2 mm.

6. Support gonflable selon l'une quelconque des revendications 1 à 5, dans lequel la cavité (5) a une forme transversale sensiblement rectangulaire et l'élément de renfort (14) a une forme correspondante.

7. Support gonflable selon l'une quelconque des revendications 1 à 6, dans lequel le corps (4) comprend une paire de parties de paroi adjacentes ayant des parties périphériques latérales alignées (6, 8, 10, 12), les parties périphériques latérales alignées étant scellées ensemble pour définir la cavité (5).

8. Support gonflable selon l'une quelconque des revendications 1 à 7, dans lequel la pompe (28) est une pompe à poire flexible actionnée manuellement.

9. Support gonflable selon l'une quelconque des revendications 1 à 8, dans lequel la pompe (28) comprend une soupape d'entrée unidirectionnelle (32).

10. Support gonflable selon l'une quelconque des revendications 1 à 9, dans lequel la pompe (28) comprend un détendeur de pression (34) ayant une configuration ouverte dans laquelle l'air pressurisé dans la cavité (5) est relâché et une configuration fermée qui empêche le relâchement de l'air dans la cavité (5), le détendeur de pression étant sollicité dans sa configuration fermée.

11. Support gonflable selon l'une quelconque des revendications 1 à 10, dans lequel le conduit (22) est constitué d'un matériau non déformable.

12. Support gonflable selon l'une quelconque des revendications 1 à 11, dans lequel le conduit (22) est accouplé amovible à la soupape de cavité (16).

13. Procédé de production d'un support gonflable (2) selon l'une quelconque des revendications 1 à 12, le procédé consistant à fournir un matériau polymère flexible, non déformable et imperméable aux gaz ; mettre le matériau sous la forme d'un corps (4) qui définit une cavité (5), la cavité (5) comprenant une partie ouverte ; situer l'élément de renfort (14) dans la cavité (5) via la partie ouverte et fermer la partie ouverte avec un joint imperméable aux gaz.
